(19) Europäisches Patentamt
European Patent Office
Office européen des brevets

(11) EP 4 213 236 A1

(12) EUROPEAN PATENT APPLICATION
published in accordance with Art. 153(4) EPC

(43) Date of publication:
**19.07.2023 Bulletin 2023/29**

(21) Application number: **22816475.2**

(22) Date of filing: **02.06.2022**

(51) International Patent Classification (IPC):
***H01M 4/131*** *(2010.01)* ***H01M 4/62*** *(2006.01)*
***H01M 4/525*** *(2010.01)* ***H01M 4/505*** *(2010.01)*
***H01M 10/052*** *(2010.01)* ***H01M 4/36*** *(2006.01)*
***H01M 4/587*** *(2010.01)* ***H01M 4/38*** *(2006.01)*
***H01M 4/48*** *(2010.01)*

(52) Cooperative Patent Classification (CPC):
**H01M 4/02; H01M 4/131; H01M 4/36; H01M 4/38; H01M 4/48; H01M 4/505; H01M 4/525; H01M 4/587; H01M 4/62; H01M 10/052;**
Y02E 60/10

(86) International application number:
**PCT/KR2022/007844**

(87) International publication number:
**WO 2022/255816 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.06.2021 KR 20210071866**

(71) Applicant: **LG Energy Solution, Ltd.**
**Seoul 07335 (KR)**

(72) Inventors:
- **JO, Chi Ho**
  **Daejeon 34122 (KR)**
- **JUNG, Wang Mo**
  **Daejeon 34122 (KR)**
- **KIM, Hye Hyeon**
  **Daejeon 34122 (KR)**
- **YOO, Tae Gu**
  **Daejeon 34122 (KR)**
- **HWANG, Jin Tae**
  **Daejeon 34122 (KR)**
- **JUNG, Hae Jung**
  **Daejeon 34122 (KR)**
- **HEO, Jong Wook**
  **Daejeon 34122 (KR)**

(74) Representative: **Hoffmann Eitle**
**Patent- und Rechtsanwälte PartmbB**
**Arabellastraße 30**
**81925 München (DE)**

# (54) POSITIVE ELECTRODE FOR LITHIUM SECONDARY BATTERY AND LITHIUM SECONDARY BATTERY COMPRISING SAME

(57) The present technology provides a positive electrode for a lithium secondary battery and a lithium secondary battery including the same. In the positive electrode, a positive electrode additive represented by Formula 1 is contained in a positive electrode mixture layer, and specific X-ray diffraction (XRD) and/or extended X-ray absorption fine-structure (EXAFS) peak(s) are controlled for cobalt remaining in the positive electrode mixture layer after initial charging to SOC 100% to have a specific oxidation number, thereby improving side reactions caused by the irreversible additive, that is, the positive electrode additive, and reducing the amount of gas such as oxygen generated during charging/discharging. Therefore, the lithium secondary battery has an excellent effect of improving battery safety and electrical performance.

EP 4 213 236 A1

【FIG. 1】

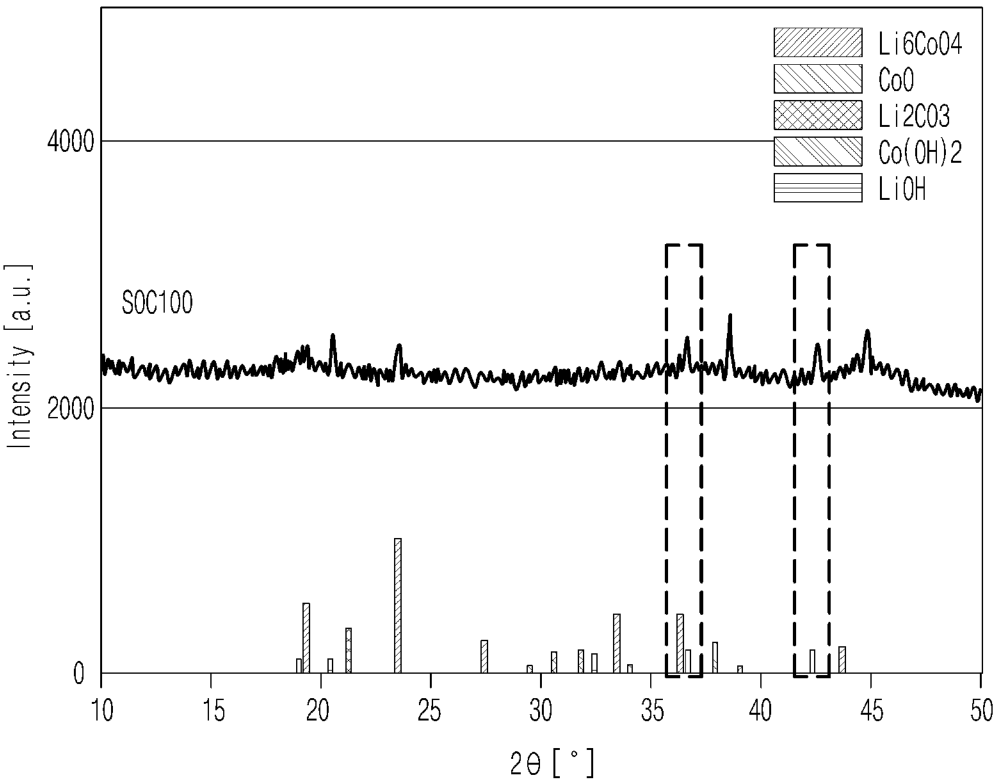
Li6CoO4
CoO
Li2CO3
Co(OH)2
LiOH
4000
2000
0
Intensity [a.u.]
SOC100
10
15
20
25
30
35
40
45
50
2θ [ ° ]

## Description

[Technical Field]

The present invention relates to a positive electrode for a lithium secondary battery and a lithium secondary battery including the same.

This application claims priority to and the benefit of Korean Patent Application No. 10-2021-0071866, filed on June 03, 2021, the disclosure of which is incorporated herein by reference in its entirety.

[Background Art]

As technology development and demand for mobile devices increase, the demand for secondary batteries as an energy source is rapidly increasing. Among these secondary batteries, lithium secondary batteries that have a high energy density, a high operating potential, a long cycle life and a low self-discharging rate have been widely studied, also commercialized and used in various fields.

Recently, as lithium secondary batteries are used as a power source for medium-to-large devices such as electric vehicles, the high capacity, high energy density and low cost of a lithium secondary battery are further required, and an irreversible additive used for an electrode is also required to have a higher irreversible capacity. However, it is true that there is a limitation to the development of a positive electrode additive having such a high irreversible capacity.

Meanwhile, a conventional irreversible additive such as $Li_6CoO_4$ is generally prepared by reacting excess lithium oxide and a metal oxide such as cobalt oxide. The irreversible additive prepared as described above is structurally unstable and generates a large amount of oxygen gas ($O_2$) as charging progresses, and in the initial charging of a secondary battery, that is, the activation of a battery, when the irreversible additive does not react completely and remains, a reaction in the subsequent charging/discharging process may occur, causing side reactions or generating a large amount of oxygen gas in the battery. The oxygen gas generated as described above may cause volume expansion of an electrode assembly, acting as one of the main factors causing the deterioration of battery performance.

$$Li_6CoO_4 \rightarrow Li_4CoO_4 \xrightarrow{O_2\text{generation}} Li_1CoO_{2.5} \xrightarrow{O_2\text{generation}} CoO_2$$

In addition, by-products such as lithium oxide may react with a binder component in the preparation of a slurry composition for manufacturing an electrode, resulting in an increase in viscosity or gelation of the composition. As a result, it is difficult to uniformly apply the electrode composition for forming an active material layer, and the characteristics of the battery are degraded.

Accordingly, to improve the safety and electrical performance of a lithium secondary battery, there is a demand for the development of technology that can reduce side reactions caused by an irreversible additive or the generation of gas such as oxygen ($O_2$) in charging/discharging.

[Related Art Document]

[Patent Document]

Korean Unexamined Patent Application Publication No. 10-2019-0078392

[Disclosure]

[Technical Problem]

Therefore, the present invention is directed to providing a positive electrode for a lithium secondary battery and a lithium secondary battery, which can reduce side reactions caused by an irreversible additive and an amount of gas such as oxygen ($O_2$) generated during charging/discharging, thereby realizing excellent battery safety and high charging/discharge capacity.

[Technical Solution]

To solve the above problems,

one aspect of the present invention provides a positive electrode for a lithium secondary battery, which includes:

a positive electrode current collector, and
a positive electrode mixture layer, which is disposed on the positive electrode current collector, and contains a positive electrode active material and a positive electrode additive represented by Formula 1 below,
wherein the positive electrode mixture layer has one or more peaks shown at 19.1±0.5°, 36.6±0.5°, 38.7±0.5°, 42.4±0.5° and 44.8±0.5°, represented by 2θ, in X-ray diffraction (XRD) measurement after initial charging to SOC 100%:

[Formula 1] $Li_pCo_{(1-q)}M^1_qO_4$

In Formula 1,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively.

Here, the positive electrode mixture layer may satisfy Equation 1 below in X-ray diffraction (XRD) measurement after initial charging to SOC 100%:

[Equation 1]

$$0.2 \leq P1/P2 \leq 1.5$$

In Equation 1,

P1 represents the highest intensity of a peak present at 42.4±0.5°, and
P2 represents the highest intensity of a peak present at 44.8±0.5°.

In addition, the positive electrode mixture layer may have peak(s) at one or more of 1.4±0.5Å, 2.4±0.5Å, 4.45±0.5Å, 4.6±0.5Å, 5.1±0.1Å and 5.2±0.1Å in extended X-ray absorption fine-structure (EXAFS) analysis after initial charging to SOC 100%.
In addition, the positive electrode additive contained in the positive electrode mixture layer may have a tetragonal structure with a space group of $P4_2/nmc$.
In addition, the positive electrode additive may be included at 0.01 to 5 parts by weight with respect to 100 parts by weight of the positive electrode mixture layer.
Moreover, the positive electrode active material contained in the positive electrode mixture layer may be a lithium metal composite oxide represented by Formula 2 below:

[Formula 2] $Li_x[Ni_yCo_zMn_wM^2_v]O_u$

In Formula 2,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, and $1.5 \leq u \leq 4.5$, respectively.

In addition, the positive electrode mixture layer may further include one or more conductive materials selected from the group consisting of natural graphite, artificial graphite, carbon black, acetylene black, Ketjen black, carbon nanotubes, graphene and carbon fiber.
Here, the content of the conductive material may be 0.5 to 5 parts by weight with respect to 100 parts by weight of the positive electrode mixture layer.
In addition, another aspect of the present invention provides
a lithium secondary battery including the positive electrode of the present invention described above, a negative electrode, and a separator disposed between the positive electrode and the negative electrode.
Here, the negative electrode may include a negative electrode current collector; and a negative electrode mixture layer disposed on the negative electrode current collector and containing a carbon material and a silicon material

as negative electrode active materials.

In addition, the carbon material contained in the negative electrode mixture layer may include one or more selected from the group consisting of natural graphite, artificial graphite, graphene, carbon nanotubes, carbon black, acetylene black, Ketjen black and carbon fiber.

Moreover, the silicon material contained in the negative electrode mixture layer may include one or more of silicon (Si) particles and silicon oxide (SiOx, $1 \leq x \leq 2$) particles.

In addition, the silicon material may be included at 1 to 20 parts by weight with respect to 100 parts by weight of the negative electrode mixture layer.

[Advantageous Effects]

In a positive electrode for a lithium secondary battery according to the present invention, a positive electrode additive represented by Formula 1 is contained in a positive electrode mixture layer, and specific X-ray diffraction (XRD) and/or extended X-ray absorption fine-structure (EXAFS) peak(s) are controlled for cobalt remaining in the positive electrode mixture layer after initial charging to SOC 100% to have a specific oxidation number, thereby improving side reactions caused by the irreversible additive, that is, the positive electrode additive, and reducing the amount of gas such as oxygen generated during charging/discharging. Therefore, the lithium secondary battery has an excellent effect of improving battery safety and electrical performance.

[Brief Description of the Drawings]

FIG. 1 is a graph showing XRD for a positive electrode mixture layer of a positive electrode for a lithium secondary battery according to the present invention after charging to SOC 100%.

FIG. 2 shows transmission electron microscopy (TEM) images and graphs of a positive electrode mixture layer included in a positive electrode for a lithium secondary battery according to the present invention after charging to SOC 100%.

FIG. 3 shows EXAFS analysis graphs for a positive electrode mixture layer for a lithium secondary battery according to the present invention after charging to SOC 100%.

[Detailed Description of the Preferred Embodiments]

The present invention may have various modifications and various examples, and thus specific examples are illustrated in the drawings and described in detail in the detailed description.

However, it should be understood that the present invention is not limited to specific embodiments, and includes all modifications, equivalents or alternatives within the spirit and technical scope of the present invention.

The terms "comprise," "include" and "have" used herein designate the presence of characteristics, numbers, steps, actions, components or members described in the specification or a combination thereof, but it should be understood that these terms do not preclude the possibility of the presence or addition of one or more other characteristics, numbers, steps, actions, components, members or a combination thereof.

In addition, when a part of a layer, film, region or plate is disposed "on" another part, this includes not only a case in which one part is disposed "directly on" another part, but also a case in which still another part is interposed therebetween. In contrast, when a part of a layer, film, region or plate is disposed "under" another part, this includes not only a case in which one part is disposed "directly under" another part, but also a case in which still another part is interposed therebetween. In addition, in this application, "on" may include not only a case of disposed on an upper part but also a case of disposed on a lower part.

Moreover, the "main component" used herein may be a component contained at 50 wt% or more, 60 wt% or more, 70 wt% or more, 80 wt% or more, 90wt% or more, 95 wt% or more, or 97.5 wt% or more with respect to the total weight of a composition or specific component, and in some cases, when the main component constitutes the entire composition or specific component, it may be contained at 100 wt%.

In addition, the "Ah" used herein refers to a capacity unit of a lithium secondary battery, and is also called "ampere hour," meaning a current amount per hour. For example, when the battery capacity is "3000 mAh," it means that a battery can be discharged with a current of 3000 mA for 1 hour.

Hereinafter, the present invention will be described in further detail.

**Positive electrode for lithium secondary battery**

In one embodiment of the present invention, a positive electrode for a lithium secondary battery includes

a positive electrode current collector, and
a positive electrode mixture layer, which is disposed on the positive electrode current collector and contains a positive electrode active material and a positive electrode additive represented by Formula 1 below,
wherein the positive electrode mixture layer has one or more peaks shown at 19.1±0.5°, 36.6±0.5°, 38.7±0.5°, 42.4±0.5° and 44.8±0.5°, represented by 2θ, in X-ray diffraction (XRD) measurement after initial charging to SOC 100%:

[Formula 1] $Li_pCo_{(1-q)}M^1_qO_4$

In Formula 1,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively.

The positive electrode for a lithium secondary battery according to the present invention has a structure in which a mixture layer is formed on the positive electrode current collector, wherein the positive electrode mixture layer has a configuration including a positive electrode active material and a positive electrode additive.

Here, the positive electrode active material may be a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr) and zirconium (Zr). For example, the positive electrode active material may be a lithium metal composite oxide represented by Formula 2 below, enabling reversible intercalation and deintercalation:

[Formula 2] $Li_x[Ni_yCo_zMn_wM^2_v]O_u$

In Formula 2,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \leq x \leq 1.30$, $0.1 \leq y < 0.95$, $0.01 < z \leq 0.5$, $0.01 < w \leq 0.5$, $0 \leq v \leq 0.2$, $1.5 \leq u \leq 4.5$, respectively.

The lithium metal composite oxide represented by Formula 2 is a metal oxide including lithium, nickel, cobalt, and manganese, and in some cases, may have a form in which a different transition metal ($M^2$) is doped. For example, the positive electrode active material may include one or more compounds selected from the group consisting of $LiNi_{1/3}Co_{1/3}Mn_{1/3}O_2$, $LiNi_{0.6}Co_{0.2}Mn_{0.2}O_2$, $LiNi_{0.8}Co_{0.1}Mn_{0.1}O_2$, $LiNi_{0.9}Co_{0.05}Mn_{0.05}O_2$, $LiNi_{0.8}Co_{0.1}Mn_{0.05}Al_{0.05}O_2$, and $LiNi_{0.7}Co_{0.1}Mn_{0.1}Al_{0.1}O_2$. As an example, in the positive electrode active material, as the lithium metal composite oxide represented by Formula 2, $LiNi_{0.6}Co_{0.2}Mn_{0.2}O_2$, $LiNi_{0.8}Co_{0.1}Mn_{0.05}Al_{0.05}O_2$ or $LiNi_{0.8}Co_{0.1}Mn_{0.1}Al_{0.05}O_2$ may be used alone or in combination.

In addition, the content of the positive electrode active material may be 85 to 95 parts by weight, specifically, 88 to 95 parts by weight, 90 to 95 parts by weight, 86 to 90 parts by weight, or 92 to 95 parts by weight with respect to 100 parts by weight of the positive electrode mixture layer.

Moreover, the positive electrode mixture layer may include a positive electrode additive imparting an irreversible capacity along with a positive electrode active material exhibiting electrical activity, wherein the positive electrode additive may include a lithium cobalt oxide represented by Formula 1 below:

[Formula 1] $Li_pCo_{(1-q)}M^1_qO_4$

In Formula 1,

$M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are $5 \leq p \leq 7$ and $0 \leq q \leq 0.5$, respectively.

The positive electrode additive may contain lithium in excess to provide lithium for lithium consumption caused by an irreversible, chemical and physical reaction at a negative electrode upon initial charging, i.e., activation, thereby increasing charge capacity, reducing irreversible capacity, and improving lifetime characteristics.

Among positive electrode additives, the positive electrode additive represented by Formula 1 may have a higher content of lithium ions than a nickel-containing oxide that is commonly used in the art, and thus can be replenish lithium ions lost through an irreversible reaction during the initial activation of the battery, so the charge/discharge capacity of the battery can be significantly improved. In addition, compared to the iron and/or manganese-containing oxide(s) commonly used in the art, there is no side reaction caused by the elution of a transition metal during the charging/discharging of the battery, so excellent stability of the battery is exhibited. Examples of the lithium cobalt oxides represented by Formula 1 may include $Li_6CoO_4$, $Li_6Co_{0.5}Zn_{0.5}O_4$, and $Li_6Co_{0.7}Zn_{0.3}O_4$.

Moreover, the average particle size of the lithium cobalt oxide represented by Formula 1 may be 0.1 to 10 μm, and specifically, 0.1 to 8 μm; 0.1 to 5 μm; 0.1 to 3 μm; 0.5 to 2 μm; 0.1 to 0.9 μm; 0.1 to 0.5 μm; 0.6 to 0.9 μm; 1 to 4 μm; 1.5 to 3.5 μm; 4 to 6 μm; 5 to 10 μm; or 6 to 9 μm. As the average particle size of the lithium cobalt oxide of the present invention is controlled within the above range, the irreversible activity of the lithium cobalt oxide may increase, and a decrease in the powder electrical conductivity of the lithium cobalt oxide may be prevented.

In addition, the lithium cobalt oxide represented by Formula 1 may have a tetragonal crystalline structure, and among the tetragonal crystal structures, may be included in a space group of $P4_2/nmc$ having a twisted tetrahedral structure consisting of a cobalt element and an oxygen element. Since the positive electrode additive has a twisted tetrahedral structure consisting of a cobalt element and an oxygen element and thus is structurally unstable, a positive electrode may be damaged by side reactions with moisture ($H_2O$) in air during manufacturing, resulting in deterioration of the electrical performance of the battery. However, in the present invention, by using a binder with low affinity for water as the binder of the composite layer, damage to the positive electrode additive may be minimized, so the electrical performance and lifespan of the lithium secondary battery may be further improved.

Moreover, the positive electrode additive may be included at 0.01 to 5 parts by weight, and specifically, 0.01 to 4 parts by weight; 0.01 to 3 parts by weight; 0.01 to 2 parts by weight; 0.1 to 1 parts by weight; 0.5 to 2 parts by weight; 1 to 3 parts by weight; 2 to 4 parts by weight; 1.5 to 3.5 parts by weight; 0.5 to 1.5 parts by weight; 1 to 2 parts by weight; 0.1 to 0.9 parts by weight; or 0.3 to 1.2 parts by weight with respect to 100 parts by weight of the positive electrode mixture layer.

Further, the positive electrode for a lithium secondary battery according to the present invention may show a specific peak with a specific intensity in XRD measurement after the initial charging to SOC 100%.

In one example, the positive electrode for a lithium secondary battery may show one or more peaks at 19.1±0.5°, 36.6±0.5°, 38.7±0.5°, 42.4±0.5° and 44.8±0.5°, represented by 2θ, in the XRD measurement for a positive electrode mixture layer after the initial charging to SOC 100%.

In another example, the positive electrode for a lithium secondary battery may show peaks at 42.4±0.5° and 44.8±0.5°, represented by 2θ, in the XRD measurement for a positive electrode mixture layer after the initial charging to SOC 100%, and the peaks can satisfy Equation 1 below:

[Equation 1]

$$0.2 \leq P1/P2 \leq 1.5$$

In Equation 1,

P1 represents the highest intensity of a peak present at 42.4±0.5°, and
P2 represents the highest intensity of a peak present at 44.8±0.5°.

Specifically, the positive electrode for a lithium secondary battery may satisfy Equation 1 in the range of 0.2 to 1.2 (that is, $0.2 \leq P1/P2 \leq 1.2$); 0.2 to 1.0 (that is, $0.2 \leq P1/P2 \leq 1.0$); 0.5 to 1.3 (that is, $0.5 \leq P1/P2 \leq 1.3$); 0.4 to 1.1 (that is, $0.4 \leq P1/P2 \leq 1.1$); 0.6 to 1.0 (that is, $0.6 \leq P1/P2 \leq 1.0$); 0.5 to 0.95 (that is, $0.5 \leq P1/P2 \leq 0.95$); or 0.7 to 0.99 (that is, $0.7 \leq P1/P2 \leq 0.99$).

The peaks are peaks indicating cobalt oxides remaining in the positive electrode mixture layer after initial charging to SOC 100%, and specifically, CoO with an oxidation number of 2; $Co_3O_4$ with an oxidation number of 8/3; and/or $Li_2Co_2O_4$ with an oxidation number of 3. In the positive electrode for a lithium secondary battery according to the present invention, the oxidation number of cobalt (Co) remaining in the positive electrode mixture layer may be controlled, so one or more of the XRD peaks may appear after initial charging to SOC 100% and the peaks satisfy Equation 1 at the same time. Therefore, the positive electrode of the present invention may prevent side reactions additionally occurring at the positive electrode in the initial charging, that is, activation of the lithium secondary battery, and reduce the amount

of generated gas such as oxygen ($O_2$) generated in the charging/discharging at the same time.

In addition, the positive electrode for a lithium secondary battery according to the present invention may have peak(s) at any one or more of 1.4±0.5Å, 2.4±0.5Å, 4.45±0.5Å, 4.6±0.5Å, 5.1±0.1Å and 5.2±0.1Å in extended X-ray absorption fine structure (EXAFS) analysis for the K absorption edge of cobalt (Co) contained in the positive electrode mixture layer after initial charging to SOC 100%.

The peaks are peaks representing the binding between cobalt (Co) and surrounding oxygen (O) and/or a transition metal, indicating the presence of CoO, $LiCoO_2$ and/or $Co_3O_4$ in the positive electrode mixture layer, and the intensity of the peak may be adjusted by the oxidation number of cobalt (Co) of the positive electrode mixture layer included in the positive electrode initially charged to SOC 100%.

Further, in the positive electrode for a lithium secondary battery, the oxidation number and/or oxidation degree of cobalt (Co) contained in the positive electrode mixture layer may be controlled under an initial charging condition. For example, the positive electrode for a lithium secondary battery may have a configuration in which three-step charging process, that is, one to three steps of activation, is continuously performed. More specifically, the initial charging step may be performed by a first activation step for applying a current of 0.05C to 0.2C to a lithium secondary battery to charge to an SOC of 30% or less; a second activation step for applying a current of 0.3C to 0.5C to the lithium secondary battery that has undergone the first activation step to charge to an SOC of more than 30% and less than 70%; and a third activation step for applying a current of 0.6C to 0.9C to the lithium secondary battery that has undergone the second activation step to charge to an SOC of 70% or more.

In one example, the positive electrode for a lithium secondary battery may be manufactured by a first activation step for applying a current of 0.08C to 0.15C to a lithium secondary battery to charge to an SOC of 30% or less in initial charging; a second activation step for applying a current of 0.35C to 0.45C to the lithium secondary battery that has undergone the first activation step to charge to an SOC of more than 30% and less than 70%; and a third activation step for applying a current of 0.65C to 0.8C to the lithium secondary battery that has undergone the second activation step to charge to an SOC of 70% or more.

Meanwhile, the positive electrode mixture layer may further include a conductive material, a binder, or an additive in addition to the positive electrode active material and the positive electrode additive.

Here, the conductive material may be used to improve the performance of the positive electrode, such as electric conductivity, and may include one or more selected from the group consisting of natural graphite, artificial graphite, carbon black, acetylene black, Ketjen black, carbon nanotubes, graphene, and carbon fiber. For example, the conductive material may include acetylene black.

In addition, the conductive material may be included at 0.5 to 5 parts by weight, and specifically, 0.5 to 4 parts by weight; 0.5 to 3 parts by weight; 0.5 to 1 part by weight; 0.5 to 2 parts by weight; or 1 to 3 parts by weight, with respect to 100 parts by weight of the positive electrode mixture layer.

Moreover, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and a copolymer thereof. In one example, the binder may include polyvinylidene fluoride.

In addition, with respect to a total of 100 parts by weight of the positive electrode mixture layer, the binder may be included at 1 to 10 parts by weight, and specifically, 2 to 8 parts by weight, or 1 to 5 parts by weight.

Moreover, the average thickness of the positive electrode mixture layer is not particularly limited, but specifically, may be 50 to 300 μm, and more specifically, 100 to 200 μm; 80 to 150 μm; 120 to 170 μm; 150 to 300 μm; 200 to 300 μm; or 150 to 190 μm.

In addition, in the positive electrode, a material that has high conductivity without causing a chemical change in the battery may be used as a positive electrode current collector. For example, as the positive electrode collector, stainless steel, aluminum, nickel, titanium, or calcined carbon may be used, and in the case of aluminum or stainless steel, one that is surface treated with carbon, nickel, titanium or silver may also be used. In addition, the positive electrode current collector may have fine irregularities formed on a surface thereof to increase the adhesion of the positive electrode active material, and may be formed in various shapes such as a film, a sheet, a foil, a net, a porous body, a foam body, and a non-woven fabric body. Moreover, the average thickness of the current collector may be appropriately applied within 3 to 500 μm in consideration of the conductivity and total thickness of the positive electrode to be manufactured.

## Lithium secondary battery

Furthermore, in one embodiment of the present invention,
a lithium secondary battery including the above-described positive electrode according to the present invention, a negative electrode, and a separator interposed between the positive electrode and the negative electrode is provided.

The lithium secondary battery according to the present invention includes the positive electrode of the present invention described above, and thus can exhibit excellent characteristics such as battery safety and electrical performance. The lithium secondary battery of the present invention has a structure including the above-described positive

electrode; a negative electrode; and a separator interposed between the positive electrode and the negative electrode.

Here, for the negative electrode, a negative electrode mixture layer is formed by applying, drying and pressing a negative electrode active material on a negative electrode current collector, and the negative electrode may selectively further include a conductive material, an organic binder polymer, or an additive as necessary, like the positive electrode.

In addition, the negative electrode active material may include, for example, a carbon material and a silicon material. The carbon material refers to a carbon material including a carbon atom as a main component, and examples of the carbon material may include graphite having a completely layered crystalline structure such as natural graphite, soft carbon having a low crystalline layered crystalline structure (graphene structure; a structure in which hexagonal honeycomb planes of carbon are arranged in layers) and hard carbon in which the above-described structures are mixed with amorphous parts, artificial graphite, expanded graphite, carbon nanofibers, non-graphitizing carbon, carbon black, acetylene black, Ketjen black, carbon nanotubes, fullerenes, activated carbon, and graphene, and preferably, one or more selected from the group consisting of natural graphite, artificial graphite, graphene and carbon nanotubes. More preferably, the carbon material includes natural graphite and/or artificial graphite, and may include any one or more of graphene and carbon nanotubes in addition to the natural graphite and/or artificial graphite. In this case, the carbon material may include 50 to 95 parts by weight, and more specifically, 60 to 90 parts by weight or 70 to 80 parts by weight of graphene and/or carbon nanotubes with respect to a total of 100 parts by weight of the carbon material.

In addition, the silicon material is a particle including silicon (Si), which is a metal component, as a main component, and may include one or more of silicon (Si) particles and silicon oxide (SiOx, $1 \leq X \leq 2$) particles. In one example, the silicon material may include silicon (Si) particles, silicon monoxide (SiO) particles, silicon dioxide ($SiO_2$) particles, or a mixture thereof.

Moreover, the silicon material may have a form in which crystalline particles and amorphous particles are mixed, and the proportion of the amorphous particles may be 50 to 100 parts by weight, and specifically, 50 to 90 parts by weight; 60 to 80 parts by weight, or 85 to 100 parts by weight based on a total of 100 parts by weight of the entire silicon material. In the present invention, thermal stability and flexibility may be improved without degrading the electrical properties of an electrode by controlling the proportion of the amorphous particles included in the silicon material to the above range.

In addition, the negative electrode active material contains a carbon material and a silicon material, and the silicon material may be included at 1 to 20 parts by weight, and particularly, 5 to 20 parts by weight; 3 to 10 parts by weight; 8 to 15 parts by weight; 13 to 18 parts by weight; or 2 to 7 parts by weight based on 100 parts by weight of the negative electrode mixture layer.

In the present invention, an amount of lithium consumption and an irreversible capacity loss during the initial charging/discharging of the battery may be reduced and charge capacity per unit mass may also be improved by adjusting the contents of the carbon material and the silicon material included in the negative electrode active material to the above range.

In one example, the negative electrode active material may include $95 \pm 2$ parts by weight of graphite; and $5 \pm 2$ parts by weight of a mixture in which silicon monoxide (SiO) particles and silicon dioxide ($SiO_2$) particles are uniformly mixed with respect to 100 parts by weight of the negative electrode active material. In the present invention, an amount of lithium consumption and an irreversible capacity loss during the initial charging/discharging of the battery may be reduced and charge capacity per unit mass may also be improved by adjusting the contents of the carbon material and the silicon material included in the negative electrode active material to the above range.

In addition, the negative electrode mixture layer may have an average thickness of 100 to 200 $\mu$m, and specifically, 100 to 180 $\mu$m, 100 to 150 $\mu$m, 120 to 200 $\mu$m, 140 to 200 $\mu$m, or 140 to 160 $\mu$m.

Moreover, the negative electrode current collector is not particularly limited as long as it does not cause a chemical change in the battery and has high conductivity, and for example, copper, stainless steel, nickel, titanium, or calcined carbon may be used, and in the case of copper or stainless steel, one whose surface is treated with carbon, nickel, titanium or silver may be used. In addition, the negative electrode current collector, like the positive electrode current collector, has fine irregularities on a surface thereof to reinforce the adhesion of the positive electrode active material and may be formed in various shapes such as a film, a sheet, a foil, a net, a porous body, a foam body, and a non-woven fabric body. In addition, the average thickness of the negative electrode current collector may be suitably applied within 3 to 500 $\mu$m in consideration of the conductivity and total thickness of the negative electrode to be manufactured.

In addition, as the separator, an insulating thin film, which is interposed between a positive electrode and a negative electrode and has high ion permeability and mechanical strength, is used. The separator is not particularly limited as long as it is conventionally used in the art, and specifically, a sheet or non-woven fabric made of chemically-resistant and hydrophobic polypropylene, glass fiber, or polyethylene may be used. In some cases, a composite separator in which a porous polymer base material such as a sheet or non-woven fabric is coated with inorganic/organic particles by an organic binder polymer may be used. When a solid electrolyte such as a polymer is used as an electrolyte, the solid electrolyte may also serve as a separator. Moreover, the separator may have a pore diameter of 0.01 to 10 $\mu$m

and a thickness of 5 to 300 μm on average.

Meanwhile, the positive electrode and the negative electrode may be wound in a jelly roll shape and accommodated in a cylindrical, prismatic or pouch-type battery, or accommodated in a pouch-type battery in a folding or stack-and-folding form, but the present invention is not limited thereto.

In addition, a lithium salt-containing electrolyte according to the present invention may consist of an electrolyte and a lithium salt, and as the electrolyte, a non-aqueous organic solvent, an organic solid electrolyte, or an inorganic solid electrolyte may be used.

As the non-aqueous organic solvent, for example, aprotic organic solvents such as N-methyl-2-pyrrolidinone, ethylene carbonate, propylene carbonate, butylene carbonate, dimethyl carbonate, diethyl carbonate, γ-butyrolactone, 1,2-dimethyoxy ethane, tetrahydroxyfuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate may be used.

As the organic solid electrolyte, for example, polymers such as a polyethylene derivative, a polyethylene oxide derivative, a polypropylene oxide derivative, a phosphoric acid ester polymer, poly alginate lysine, polyester sulfide, polyvinyl alcohol, polyvinylidene fluoride, and polymers including an ionic dissociation group may be used.

As the inorganic solid electrolyte, for example, a nitride, halide or sulfate of lithium such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$ may be used.

The lithium salt is a material that is readily soluble in the non-aqueous electrolyte, and may be, for example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium tetraphenylborate, or lithium imide.

In addition, to improve charging/discharging characteristics and flame retardancy, for example, pyridine, triethylphosphite, triethanolamine, cyclic ether, ethylene diamine, n-glyme, hexamethylphosphoric acid triamine, a nitrobenzene derivative, sulfur, a quinone imine dye, N-substituted oxazolidinone, N, N-substituted imidazolidine, ethylene glycol dialkyl ether, an ammonium salt, pyrrole, 2-methoxy ethanol, or aluminum trichloride may be added to the electrolyte. In some cases, to impart incombustibility, a halogen-containing solvent such as carbon tetrachloride or ethylene trifluoride may be further included, and to improve high-temperature storage properties, carbon dioxide gas may be further included, and fluoro-ethylene carbonate (FEC) or propene sultone (PRS) may be also included.

[Examples]

Hereinafter, the present invention will be described in further detail with reference to examples and an experimental example.

However, the following examples and experimental example merely illustrate the present invention, and the content of the present invention is not limited to the following examples and experimental example.

**Examples 1 and 2 and Comparative Examples 1 to 4. Manufacture of**

**lithium secondary battery**

a) Manufacture of positive electrode for lithium secondary battery

A positive electrode slurry for a lithium secondary battery was prepared by injecting N-methyl pyrrolidone into a homo mixer, weighing and inputting 97 parts by weight of a positive electrode active material $LiNi_{0.6}Co_{0.2}Mn_{0.2}O_2$, 0.8 parts by weight of a positive electrode additive $Li_6CoO_4$ or $Li_6Co_{0.7}Zn_{0.3}O_4$; 0.7 parts by weight of a conductive material, which is a mixture of carbon nanotubes (average size: 60±10 nm) and Denka black (average size: 2±0.5 μm) (75:25 wt./wt.); and 1.5 parts by weight of a binder PVdF with respect to 100 parts by weight of the solid content of the positive electrode slurry, and mixing the resultant at 2,000 rpm for 60 minutes. A positive electrode was manufactured by applying the prepared positive electrode slurry to one surface of an aluminum current collector, drying the slurry at 100 °C, and rolling the resultant. Here, the total thickness of the positive electrode mixture layer was 130 μm, and the total thickness of the manufactured positive electrode was approximately 200 μm.

b) Manufacture of lithium secondary battery

With respect to 100 parts by weight of the solid content of a negative electrode slurry, 84 parts by weight of a negative electrode active material natural graphite and 14 parts by weight of silicon oxide (SiOx, $1 \leq x \leq 2$) particles; and 2 parts by weight of a binder styrene butadiene rubber (SBR) were prepared, and a negative electrode slurry was prepared in the same manner as the positive electrode slurry. Here, the graphite used in the formation of the negative electrode mixture layer was natural graphite (average particle diameter: 0.01 to 0.5 μm), and the silicon oxide (SiOx)

particle had an average particle size of 0.9 to 1.1 μm. A negative electrode was manufactured by applying the prepared negative electrode slurry to one surface of a copper current collector, drying the slurry at 100 °C and rolling the resultant. Here, the total thickness of the negative electrode mixture layer was 150 μm, and the total thickness of the manufactured negative electrode was approximately 250 μm.

A battery was assembled in a full-cell type by stacking a separator (thickness: approximately 16 μm) consisting of a porous polyethylene (PE) film to be interposed between the prepared positive electrode and negative electrode and injecting E2DVC as an electrolyte. Here, the "E2DVC" refers to a type of carbonate-based electrolyte, which is a mixed solution in which lithium hexafluorophosphate ($LiPF_6$, 1.0M) and vinyl carbonate (VC, 2 wt%) are added to a mixture of ethylene carbonate (EC): dimethyl carbonate (DMC): diethyl carbonate (DEC) = 1: 1: 1 (volume ratio).

A lithium secondary battery was manufactured by performing initial charging of the manufactured full cell at 22±2 °C under conditions shown in Table 1 below.

[Table 1]

| | Positive electrode additive | Initial charging current condition | | |
|---|---|---|---|---|
| | Type | First activation step (SOC<_30%) | Second activation step (30%<SOC<70%) | Third activation step (70%<_SOC) |
| Example 1 | $Li_6CoO_4$ | 0.1C | 0.4C | 0.7C |
| Example 2 | $Li_6Co_{0.7}Zn_{0.3}O_4$ | 0.1C | 0.4C | 0.7C |
| Comparative Example 1 | $Li_6CoO_4$ | 0.01C | | |
| Comparative Example 2 | $Li_6CoO_4$ | 2.0C | | |
| Comparative Example 3 | $Li_6CoO_4$ | 0.7C | 1.0C | 1.5C |
| Comparative Example 4 | $Li_6CoO_4$ | 1.5C | 1.0C | 0.7C |

**Experimental Example.**

To evaluate the performance of the positive electrode for a secondary battery according to the present invention, the following experiments were carried out.

a) Analysis of oxidation number of cobalt in initially-charged positive electrode mixture layer

Samples were prepared by disassembling a positive electrode from each of the lithium secondary batteries manufactured in Examples 1 and 2 and Comparative Examples 1 to 4, and delaminating a positive electrode mixture layer from the disassembled positive electrode. XRD, TEM and EXAFS analyses were carried out for each of the prepared samples, and the results are shown in FIGS. 1 to 3.

In addition, the XRD analysis uses an XRD analyzer (Rigaku), and XRD patterns were obtained by scanning an X ray at a wavelength of 1.5406 Å (Cu Ka radiation, 40 kV, 100 mA) and at 2θ in a range of 10° to 50°, and a scanning rate of 5°/sec. Moreover, in the measured X-ray diffraction graph, the intensity (P1) of the peak appearing at 2θ=42.4±0.5° and the intensity (P2) of the peak appearing at 2θ=44.8±0.5° were measured to calculate the ratio (P1/P2) thereof, and the result is shown in Table 2 below.

b) Evaluation of amount of cumulative gas generation in charging/discharging after initial charging

After degassing was performed on the initially-charged lithium secondary batteries of Examples 1 and 2 and Comparative Examples 1 to 4, the lithium secondary batteries were discharged to a final voltage of 2V with a discharge current of 0.1C, and the secondary batteries from which internal gas was removed were repeatedly charged/discharged 50 times at 45 °C under conditions of 4.5V and 1.0C. Here, the amount of cumulative gas generated after initial charging/discharging was measured by measuring the amount of gas generated in each charging/discharging. The result is shown in Table 2 below.

c) Evaluation of cycle life performance

A degassing process was performed on initially-charged lithium secondary batteries of Examples 1 and 2 and Comparative Examples 1 to 4, and the batteries were discharged with a discharge current of 0.1C until a final voltage of 2V, and then subjected to 100 cycles of charging/discharging (n=100) of the batteries under conditions of 25 °C, a charge termination voltage of 4.25V, a discharge termination voltage of 2.5V, and 0.5C/0.5C, followed by measuring capacity retention rates [%]. Here, the capacity retention rates were calculated using Equation 2 below, and the result is shown in Table 2 below:

[Equation 2]

$$\text{Capacity retention rate (\%)} = (\text{discharge capacity at 100 cycles of charging/discharging/discharge capacity at initial cycle of charging/discharging}) \times 100$$

[Table 2]

| | XRD peak ratio (P1/P2) | Cumulative gas generation [μl/g] | Initial charge capacity [Ah] | Capacity retention rate [%] after 100 cycles of charging/discharging |
|---|---|---|---|---|
| Example 1 | 0.87 | 26 | 104.6 | 98 |
| Example 2 | 0.89 | 39 | 105.2 | 97 |
| Comparative Example 1 | 0.31 | 249 | 101.5 | 93 |
| Comparative Example 2 | 1.90 | 188 | 100.9 | 91 |
| Comparative Example 3 | 1.62 | 314 | 101.7 | 94 |
| Comparative Example 4 | 1.58 | 257 | 102.4 | 93 |

Referring to Table 2 and FIGS. 1 to 3, it can be seen that, after the positive electrode for a lithium secondary battery according to the present invention is charged to SOC 100%, XRD peaks and/or EXAFS peaks were controlled in a specific range, thereby improving the safety and electrical performance of a lithium secondary battery.

Specifically, TEM analysis showed that, in the lithium secondary battery prepared in the example, as cobalt oxides, for example, CoO, $Co_3O_4$ and $LiCoO_2$ are included in the positive electrode mixture layer. In addition, according to the EXAFS analysis for the K absorption edge of cobalt (Co), it is seen that the positive electrode mixture layer has peaks at the interatomic distances (that is, radial distances) of 1.4±0.5Å, 2.4±0.5Å, 4.45±0.5Å, 4.6±0.5Å, 5.1±0.1Å and 5.2±0.1Å. The peaks indicate peaks realized by CoO, $Co_3O_4$ and/or $LiCoO_2$ contained in the positive electrode mixture layer.

In addition, the positive electrode mixture layer showed peaks at 19.1±0.5°, 36.6±0.5°, 38.7±0.5°, 42.4±0.5° and 44.8±0.5°, represented by 2θ, in XRD measurement, and among these peaks, the intensity ratio (P1/P2) of the peaks shown at 2θ=42.4±0.5° and 2θ=44.8±0.5° was approximately 0.8 to 0.9. Here, the peak shown at 2θ=44.8±0.5° is a peak representing the [4,0,0] crystal lattice of CoO, the peak at 2θ=42.4±0.5° is a peak representing the [2,0,0] crystal lattice of $Co_3O_4$, and the ratio thereof may indicate the oxidation number and/or oxidation degree of cobalt (Co) contained in the positive electrode mixture layer. This result means that, in the positive electrode of the present invention, the oxidation number of cobalt (Co) present in the positive electrode mixture layer is adjusted to a specific range after the initial charging to SOC 100%.

Further, it was confirmed that, in the lithium secondary battery of the example including the above-described positive electrode, the amount of gas generated during the charging/discharging is significantly reduced after degassing of the gas generated by the initial charging/discharging. In addition, it was confirmed that the lithium secondary battery

has a high initial charge capacity of 103 Ah or more and a high capacity retention rate of 95% or more.

From the above result, in the positive electrode for a lithium secondary battery according to the present invention, a positive electrode additive represented by Formula 1 is contained in a positive electrode mixture layer, and specific XRD and/or EXAFS peak(s) are controlled for cobalt remaining in the positive electrode mixture layer after initial charging to SOC 100% to have a specific oxidation number, thereby improving side reactions caused by the irreversible additive, that is, the positive electrode additive, and reducing the amount of gas such as oxygen generated during charging/discharging. Therefore, it can be seen that the battery safety and electrical performance of the lithium secondary battery are improved.

In the above, the present invention has been described with reference to exemplary embodiments, but it should be understood by those skilled in the art or those of ordinary skill in the art that the present invention can be variously modified and changed without departing the spirit and technical scope of the present invention described in the accompanying claims.

Accordingly, the technical scope of the present invention is not limited to the content described in the detailed description of the specification, but should be defined by the claims.

## Claims

1. A positive electrode for a lithium secondary battery, comprising:

   a positive electrode current collector, and
   a positive electrode mixture layer disposed on the positive electrode current collector and containing a positive electrode active material and a positive electrode additive represented by Formula 1 below,
   wherein the positive electrode mixture layer has one or more peaks shown at 19.1±0.5°, 36.6±0.5°, 38.7±0.5°, 42.4±0.5° and 44.8±0.5°, represented by 2θ, in X-ray diffraction (XRD) measurement after initial charging to SOC 100%:

   [Formula 1] $Li_pCo_{(1-q)}M^1{}_qO_4$

   In Formula 1,

   $M^1$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
   p and q are $5 \leq p \leq 7$ and $0 \leq q \leq 0.5$, respectively.

2. The positive electrode of claim 1, wherein the positive electrode mixture layer satisfies Equation 1 below in X-ray diffraction (XRD) measurement after initial charging to SOC 100%:
   In Equation 1,

   P1 represents the highest intensity of a peak present at 42.4±0.5°, and
   P2 represents the highest intensity of a peak present at 44.8±0.5°.

3. The positive electrode of claim 1, wherein the positive electrode mixture layer has a peak at any one or more of 1.4±0.5Å, 2.4±0.5Å, 4.45±0.5Å, 4.6±0.5Å, 5.1±0.1Å and 5.2±0.1Å in extended X-ray absorption fine structure (EXAFS) analysis after initial charging to SOC 100%.

4. The positive electrode of claim 1, wherein the positive electrode additive has a tetragonal structure with a space group of $P4_2/nmc$.

5. The positive electrode of claim 1, wherein the positive electrode additive is comprised at 0.01 to 5 parts by weight with respect to 100 parts by weight of the positive electrode mixture layer.

6. The positive electrode of claim 1, wherein the positive electrode active material is a lithium metal composite oxide represented by Formula 2 below:

   [Formula 2] $Li_x[Ni_yCo_zMn_wM^2{}_v]O_u$

   In Formula 2,

$M^2$ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v and u are $1.0 \le x \le 1.30$, $0.1 \le y < 0.95$, $0.01 < z \le 0.5$, $0.01 < w \le 0.5$, $0 \le v \le 0.2$, and $1.5 \le u \le 4.5$, respectively.

**7.** The positive electrode of claim 1, wherein the positive electrode mixture layer further comprises one or more conductive materials selected from the group consisting of natural graphite, artificial graphite, carbon black, acetylene black, Ketjen black, carbon nanotubes, graphene and carbon fiber.

**8.** The positive electrode of claim 7, wherein the content of the conductive material is 0.5 to 5 parts by weight with respect to 100 parts by weight of the positive electrode mixture layer.

**9.** A lithium secondary battery comprising the positive electrode of claim 1, a negative electrode and a separator disposed between the positive electrode and the negative electrode.

**10.** The battery of claim 9, wherein the negative electrode comprises a negative electrode current collector; and a negative electrode mixture layer disposed on the negative electrode current collector and containing a carbon material and a silicon material as negative electrode active materials.

**11.** The battery of claim 10, wherein
the silicon material is comprised at 1 to 20 parts by weight with respect to 100 parts by weight of the negative electrode mixture layer.

**12.** The battery of claim 10, wherein the carbon material comprises one or more selected from the group consisting of natural graphite, artificial graphite, graphene, carbon nanotubes, carbon black, acetylene black, Ketjen black and carbon fiber.

**13.** The battery of claim 10, wherein the silicon material comprises one or more of silicon (Si) particles and silicon oxide ($SiO_x$, $1 \le x \le 2$) particles.

【FIG. 1】

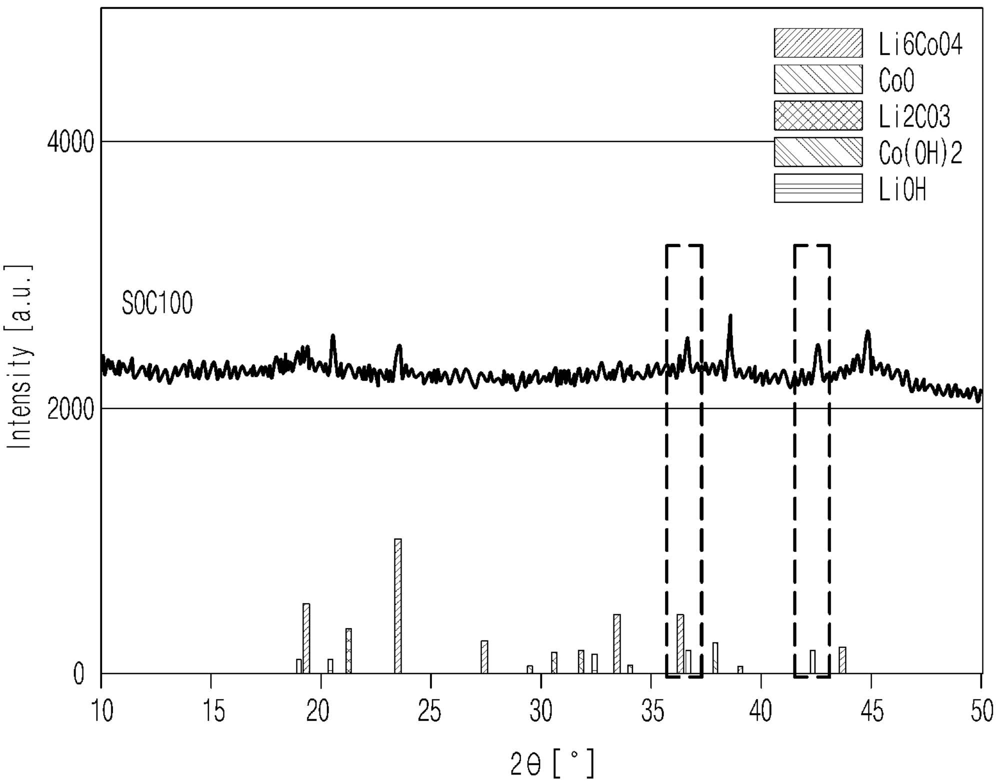
Li6Co04
Co0
Li2C03
Co(OH)2
LiOH
SOC100
4000
2000
0
Intensity [a.u.]
10
15
20
25
30
35
40
45
50
2θ [°]

【FIG. 2】

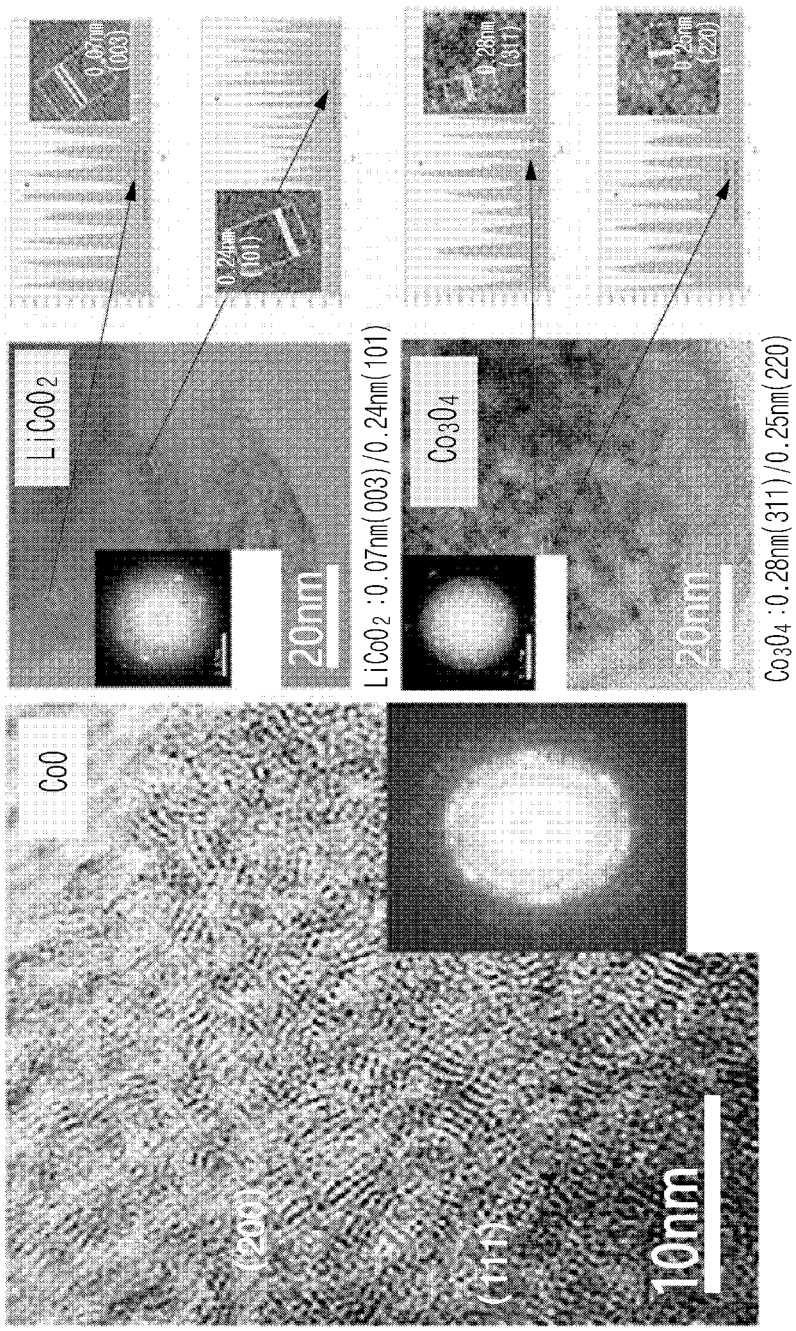
CoO
(200)
(111)
10nm
LiCoO2
20nm
LiCoO2 : 0.07nm(003)/0.24nm(101)
Co3O4
20nm
Co3O4 : 0.28nm(311)/0.25nm(220)

【FIG. 3】

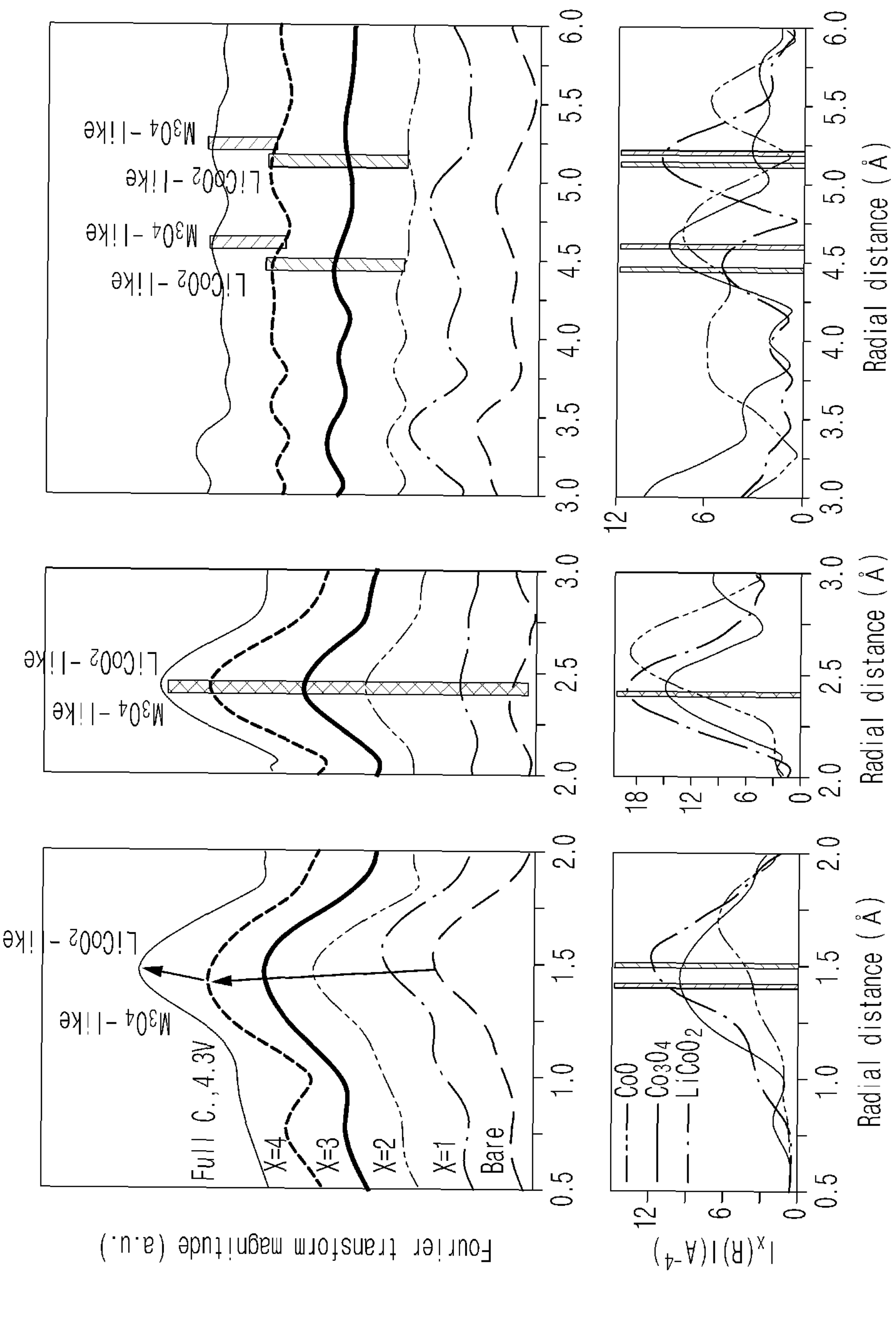

Fourier transform magnitude (a.u.)
Full C., 4.3V
X=4
X=3
X=2
X=1
Bare
M3O4 -like
LiCoO2 -like
|χ(R)|(Å-4)
CoO
Co3O4
LiCoO2
Radial distance (Å)

**INTERNATIONAL SEARCH REPORT**

International application No. **PCT/KR2022/007844**

**A. CLASSIFICATION OF SUBJECT MATTER**

**H01M 4/131**(2010.01)i; **H01M 4/62**(2006.01)i; **H01M 4/525**(2010.01)i; **H01M 4/505**(2010.01)i; **H01M 10/052**(2010.01)i; **H01M 4/36**(2006.01)i; **H01M 4/587**(2010.01)i; **H01M 4/38**(2006.01)i; **H01M 4/48**(2010.01)i

According to International Patent Classification (IPC) or to both national classification and IPC

**B. FIELDS SEARCHED**

Minimum documentation searched (classification system followed by classification symbols)

H01M 4/131(2010.01); H01M 10/052(2010.01); H01M 10/0525(2010.01); H01M 10/40(2006.01); H01M 4/13(2010.01); H01M 4/48(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 첨가제(positive electrode additive), 양극 활물질(positive active material), X선 회절(X-ray diffraction, XRD)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0064424 A (LG CHEM, LTD.) 10 June 2019 (2019-06-10) See claims 1, 3, 8 and 11; and paragraphs [0032], [0034], [0069], [0076], [0077], [0080], [0109] and [0124]. | 1-13 |
| Y | JP 2003-109662 A (TDK CORP.) 11 April 2003 (2003-04-11) See abstract; claims 1 and 9; and paragraphs [0017] and [0051]. | 1-13 |
| A | KR 10-2020-0066048 A (POSCO et al.) 09 June 2020 (2020-06-09) See claims 1-16. | 1-13 |
| A | KR 10-2019-0079534 A (LG CHEM, LTD.) 05 July 2019 (2019-07-05) See entire document. | 1-13 |
| A | KR 10-2013-0079109 A (UNIST ACADEMY-INDUSTRY RESEARCH CORPORATION et al.) 10 July 2013 (2013-07-10) See entire document. | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2022** | **02 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/007844**

| Patent document cited in search report | Publication date (day/month/year) | Patent family member(s) | Publication date (day/month/year) |
|---|---|---|---|
| KR 10-2019-0064424 A | 10 June 2019 | KR 10-2073951 B1 | 05 February 2020 |
| | | US 10403929 B2 | 03 September 2019 |
| | | US 2019-0165412 A1 | 30 May 2019 |
| JP 2003-109662 A | 11 April 2003 | None | |
| KR 10-2020-0066048 A | 09 June 2020 | CN 113169338 A | 23 July 2021 |
| | | EP 3890075 A1 | 06 October 2021 |
| | | EP 3890075 A4 | 23 February 2022 |
| | | JP 2022-510983 A | 28 January 2022 |
| | | KR 10-2217302 B1 | 18 February 2021 |
| | | US 2022-0181627 A1 | 09 June 2022 |
| | | WO 2020-111580 A1 | 04 June 2020 |
| KR 10-2019-0079534 A | 05 July 2019 | CN 110651389 A | 03 January 2020 |
| | | EP 3605678 A1 | 05 February 2020 |
| | | EP 3605678 A4 | 03 June 2020 |
| | | US 11283064 B2 | 22 March 2022 |
| | | US 2020-0083525 A1 | 12 March 2020 |
| | | WO 2019-132449 A1 | 04 July 2019 |
| KR 10-2013-0079109 A | 10 July 2013 | US 2013-0171524 A1 | 04 July 2013 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210071866
- KR 1020190078392